# EUROPEAN PATENT SPECIFICATION

(11) **EP 1 916 318 B1**
(45) Date of publication and mention of the grant of the patent: **17.02.2016**
(21) Application number: 07254211.1
(22) Date of filing: 24.10.2007
(51) Int. Cl.: C23C 24/04, B23K 1/20, B23K 3/06

(54) **Braze pre-placement using cold spray deposition**
Lötvorabplatzierung über Kaltspray-Ablagerung
Pré-placement de brasage utilisant un dépôt de pulvérisation à froid

(30) Priority: 27.10.2006 US 588814
(43) Date of publication of application: 30.04.2008
(73) Proprietor: United Technologies Corporation, Hartford, CT 06101 (US)
(72) Inventor: Debiccari, Andrew, North Branford, CT 06471 (US); Morisset, Charles-Andre, Saint-Lambert J4R 1E7 Quebec (CA); Haynes, Jeffrey D., Stuart, FL 34996 (US); Schubert, Gary, East Hampton, CT 06424 (US)
(74) Representative: Leckey, David Herbert

(56) References cited:
- WO-A1-96/09121
- WO-A1-97/18054
- US-A1- 2007 164 089

## Description

### BACKGROUND OF THE INVENTION

The invention relates generally to the field of joining metal parts. More specifically, the invention relates to a method for depositing braze or solder filler material onto a component part joint using cold spray deposition technology as claimed in claim 1.

Brazing is a joining process where a non-ferrous, metal alloy filler is heated to a melting temperature and distributed between two or more close-fitting parts by capillary action. At its liquid temperature, the molten filler metal interacts with a thin layer of the base metal, cooling to form an exceptionally strong, sealed joint due to grain structure interaction. The brazed joint comprises different layers, each metallurgically linked to each other.

A variety of alloys of metals, including silver, tin, zinc, copper and others are used as the filler material for brazing processes. Metals such as aluminum can be brazed though aluminum requires more skill and special fluxes. It conducts heat much better than steel and is more prone to oxidation. Some metals, such as titanium cannot be brazed because they are insoluble with other metals, or have an oxide layer that forms too quickly at intersoluble temperatures.

To achieve the highest strength for a brazed joint, the component parts must be closely fitted and the base metals must be exceptionally clean and free of oxides. For capillary action to be effective, joint clearances in the range of between 0.000 to 0.006 inch (0 to 150 µm) are recommended. In most cases, flux is required to prevent oxides from forming while the metal is heated. The most common fluxes for bronze brazing are borax-based.

Current methods of applying braze filler material include paste with flux, foils, or sintered preforms. Pastes have difficulties achieving uniform thickness and controlling contamination. Foils require attachment methods such as tack welding and are limited in use due to geometric constraints. Sintered preforms must account for dimensional changes that takes place during the sintering process and adds to the complexity of the manufacturing process. These methods have many limitations and may prove problematic.

Cold spray deposition is an emerging technology where solid powder particles at or near room temperature are accelerated to velocities in the range of 500 to 1,500 m/sec in a supersonic gas jet. Upon impact with a work piece surface, the high-velocity cold particles plastically deform and bond with the underlying material by a process similar to explosive welding, but on a much smaller scale. Cold spray deposition can be used to deposit a wide range of metals and other ductile materials at high production rates.

Cold spray deposition offers many advantages over other metallization processes. Since the powders are not heated to high temperatures, no oxidation, decomposition, or other degradation of the feedstock material occurs. Because the process occurs essentially at room temperature, copper, aluminum, and many other reactive metals can be cold sprayed in an open-air environment with little or no oxidation.

Powder oxidation during deposition is also controlled since the particles are contained within the accelerating gas stream. Other potential advantages include the formation of compressive residual surface stresses and retaining the microstructure of the feedstock. Also, because relatively low temperatures are used, thermal distortion of the substrate will be minimized. Because the feedstock is not melted, cold spray offers the ability to deposit materials that cannot be sprayed conventionally due to the formation of brittle intermetallics or a propensity to crack upon cooling or during subsequent heat treatments.

It is a challenge to ensure high-strength, consistent brazes in production work due to the required precision and cleanliness. It is therefore desirable to have a method that allows for the precise application of braze filler material using cold spray deposition technology for brazing in production environments.

WO 96/.09121 discloses a generator for producing droplets of liquid for deposition on a surface.

### SUMMARY OF THE INVENTION

Although there are various methods for applying braze filler material to a component part interface prior to the application of heat, such methods are not completely satisfactory. The inventors have recognized that it would be desirable to have methods that apply braze filler material using cold spray deposition technology to precisely apply braze filler material having a uniform thickness regardless of the joint contour.

The present invention provides a method for joining two components as set forth in claim 1.

The details of one or more embodiments of the invention are set forth in the accompanying drawings and the description below. Other features and advantages of the invention will be apparent from the description and drawings, and from the claims.

### BRIEF DESCRIPTION OF THE DRAWINGS

FIG. 1 is an exemplary side-view of a component joint prior to brazing.
FIG. 2 is an exemplary side-view of the component joint in FIG. 1 while undergoing braze filler material deposition.
FIG. 3 is an exemplary side-view of the component joint in FIG. 1 positioned for brazing.
FIG. 4 is an exemplary side-view of the component joint in FIG. 1 brazed.
FIG. 5 is a block diagram of an exemplary method according to the invention.

### DETAILED DESCRIPTION

Embodiments of the invention will be described with reference to the accompanying drawing figures wherein like numbers represent like elements throughout. Further, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. The terms "mounted," "connected," and "coupled" are used broadly and encompass both direct and indirect mounting, connecting, and coupling. Further, "connected" and "coupled" are not restricted to physical or mechanical connections or couplings.

Embodiments of the invention provide methods using cold spray deposition technology to deposit braze filler and solder materials directly onto a component joint interface surface. The invention allows for the application of filler materials uniformly across complex contours eliminating the need for sintered preforms and controlling joint interface cleanliness.

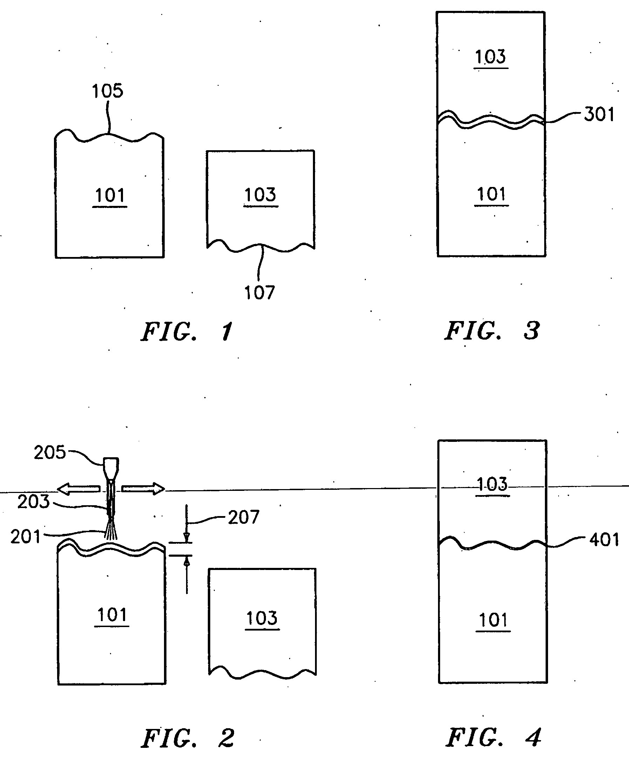

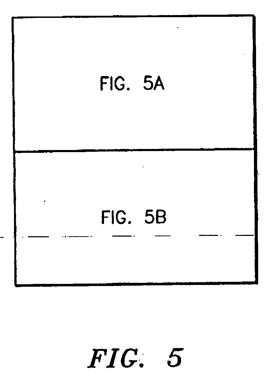

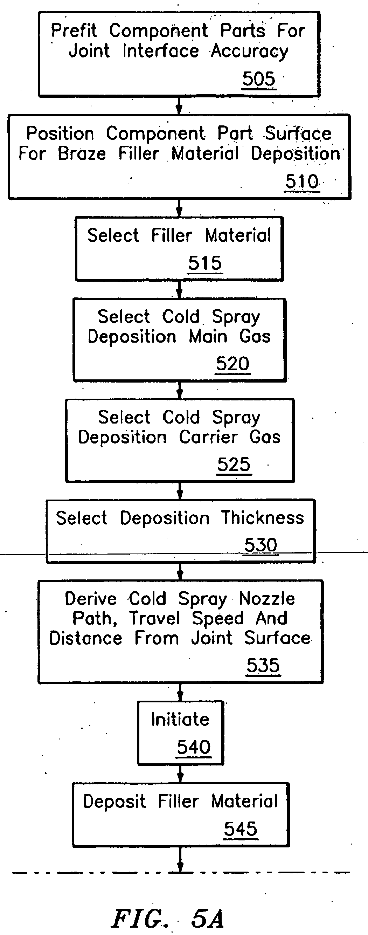

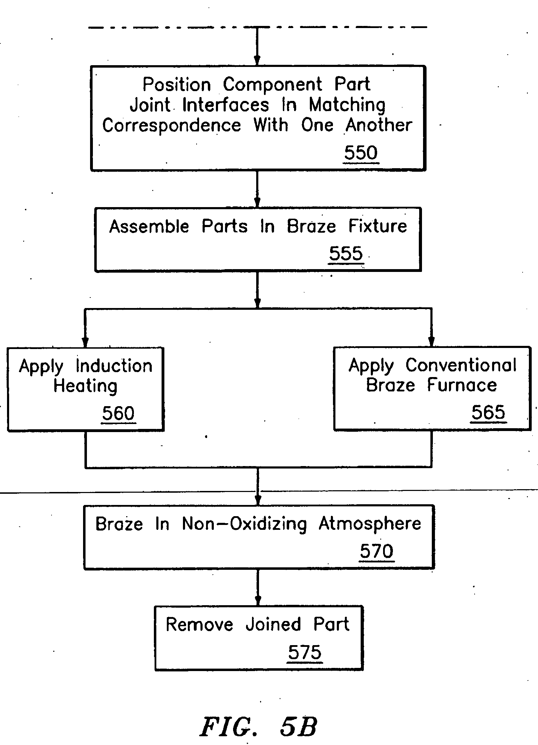

Shown in FIG. 1 is a joint interface between two exemplary component parts 101, 103 that are to be brazed. Fig. 5 shows a method of the invention. The joint interface may have a flat surface or a three-dimensional contour 105. Both parts 101, 103 have the same interface in matching correspondence with each other. The greater the interface accuracy (mechanical connection), the greater strength the brazed joint will have (step 505).

FIG. 2 shows the application of a filler material 201 onto one component part 101 joint surface 105 using a cold spray deposition technique 203 (step 510). The cold spray deposition system includes a spray gun having a converging/diverging nozzle 205 through which the filler material is sprayed and deposited onto a component 101 joint surface 105.

In the method of the invention, the braze filler material feedstock may be a powdered metal material of thermal spraying sizing, such as -325 mesh. The powder metal material may be any commercially available powders from industry suppliers of braze filler materials (step 515).

The powdered metal material particles that are used to form the filler materials deposited onto the component 101 joint surface 105 preferably have a diameter in the range of about 5 microns to 50 microns (0.2-2.0 mils). Smaller particle sizes allow for higher particle velocities. Below 5 microns in diameter, the particles risk getting swept away from the surface 105 due to a bow shock layer above the surface 105, i.e., insufficient mass to propel the particle through the bow shock. The narrower the particle size distribution, the more uniform the particle velocity will be. This is because the small particles in the spray/plume will hit the slower, larger ones and effectively reduce the velocity of both.

The particles of the filler material may be accelerated to supersonic velocities using compressed gas, such as helium, nitrogen, other inert gases, and mixtures thereof. Nitrogen is a preferred gas because it is relatively inexpensive and a 100% dense deposit is not required since the deposited filler material will be melted.

The bonding mechanism employed by the method of the invention for transforming the powdered filler material into a deposit is solid state, meaning that the particles plastically deform but do not melt. Any oxide layer that is formed on the particles, or is present on the component surface, is broken up and fresh metal-to-metal contact is made at very high pressures. This aspect is preferable for aluminum brazing to mitigate Al₂O₃ from the deposition surface.

The powdered metal material used to form the filler material may be fed to the spray gun using any suitable means known in the art, such as modified thermal spray feeders. Fluidized bed feeders and barrel roll feeders with an angular slit may also be used. Any feeder that can deliver the powdered metal at the required feed rate may be employed.

In the method of the invention, the feeders may be pressurized with a gas selected from the group consisting of helium, nitrogen, other inert gases, and mixtures thereof. Feeder pressures are generally 15 psi (103 kPa) above the main gas or head pressures, which pressures are usually in the range of from 200 psi to 500 psi (1.38 to 3.45 MPa), depending on the filler material composition.

The main gas is heated so that gas temperatures are in the range of from 600 °F to 1,200 °F (316°C to 649°C). If desired, the main gas may be heated as high as approximately 1,250 °F (677°C) depending on the material being deposited. The gas may be heated to keep it from rapidly cooling and freezing once it expands past the throat of nozzle 205. The net effect is a temperature on the component joint surface 105 in the range of from 100 °F to 200 °F (38°C to 93°C) during deposition depending on the area and thickness of the applied material. The temperature of the underlying substrate remains low enough such that it does not undergo any metallurgical changes due to temperature. Any suitable means known in the art may be used to heat the gas.

To deposit the filler material, the nozzle 205 may pass over the joint surface 105 more than once. The number of passes required depends on the desired thickness of the filler material. A preferred thickness is 0.002 inch (0.051 mm). The method is capable of forming a deposit having any desired thickness. When applying braze filler, it is desirable to limit the thickness per pass in order to avoid a quick build up of residual stresses and unwanted debonding between deposit layers.

The main gas that is used to deposit the filler material particles onto the surface 105 may be passed through the nozzle 205 at a flow rate of from 0.001 SCFM to 50 SCFM (0.283 to 1415 litres/minute), preferably in the range of from 15 SCFM to 35 SCFM (424.75 to 991.1 litres/minute). The foregoing flow rates are preferred if helium is used as the main gas. If nitrogen is used by itself or in combination with helium as the main gas, the nitrogen gas may be passed through the nozzle 205 at a flow rate of from 0.001 SCFM to 30 SCFM (0.283 to 849.5 litres/minute), preferably from 4 to 30 SCFM (113.3 to 849.5 litres/minute). Alternatively, the nozzle 205 may have a single inlet which is connected to a valve for switching between two gases (step 520).

The main gas temperature may be in the range of from 600 °F to 1,200 °F (316°C to 649°C), preferably from 700 °F to 1,000 °F (371°C to 538°C), and most preferably from 725 °F to 900 °F (385°C to 482°C).

The pressure of the spray gun may be in the range of from 200 psi to 500 psi (1.38 to 3.45 MPa), preferably from 200 psi to 400 psi (1.38 to 2.76 MPa) and most preferably 275 psi to 375 psi (1.90 to 2.59 MPa). The filler material particles are fed from a hopper, which is under a pressure of 10 to 50 psi (69 to 345 kPa) higher than the specific main gas pressure, preferably 15 psi (103 kPa) higher, to the spray gun via line at a rate in the range of from 10 grams/min to 100 grams/min, preferably from 15 grams/min to 50 grams/min.

The filler material is fed to the spray gun using a non-oxidizing carrier gas. The carrier gas may be introduced at a flow rate of from 0.001 SCFM to 50 SCFM (0.283 to 1415.8 litres/minute), preferably from 8 SCFM to 15 SCFM (226.5 to 424.75 litres/minute). The foregoing flow rate is useful if helium is used as the carrier gas. If nitrogen by itself or mixed with helium is used as the carrier gas, a flow rate of from 0.001 SCFM to 30 SCFM (0.283 to 849.5 litres/minute), preferably from 4 to 10 SCFM, may be used (step 525) (113.3 to 283.2 litres/minute.

The nozzle 205 spray distance from the component interface surface is not determined by the deposit thickness. Preferably, the spray distance is in a range of from 10 mm to 50 mm. For example, if a 3 mm thick deposit is required, the nozzle may begin at a starting spray distance of 25 mm. As the braze filler material is deposited, the nozzle distance of 25 mm is maintained from the surface of the deposited braze filler material, not the original component interface surface. In this manner, the same distance is maintained regardless of the deposited braze filler material thickness. The deposition process is insensitive to small variations in nozzle spray distance. For some deposits of less than a predetermined thickness, such as 0.2 inch (5.08 mm), the nozzle spray distance may not require adjusting as deposition progresses.

The velocity of the powdered filler material particles leaving the spray nozzle 205 may be in the range of from 825 m/s to 1400 m/s. Preferably from 850 m/s to 1200 m/s. The deposit thickness 207 per pass may be.in the range of from 0.001 inches to 0.030 inches (0.025 to 0.76 mm).

The nozzle 205 of the cold spray is transitioned across the joint surface 105 at a predetermined, controlled rate. Multiple passes may be performed according to the properties of the filler material, either by controlling the nozzle by hand or by using robotics. The rate and orientation of the nozzle 205 are controlled to achieve a uniform filler material thickness 207 (step 530). Preferably, the spray nozzle is maintained perpendicular to the interface, following the surface contour if any. Alternatively, the nozzle may be stationary and the joint interface surface transitioned across the spray pattern at a controlled rate and distance depending on work piece size.

The invention can use any deposition process that provides sufficient energy to accelerate particles to a high enough velocity such that, upon impact, the particles plastically deform and bond to a surface, building a relatively dense coating or structural deposit. The deposition process does not metallurgically transform the particles from their solid state.

Various techniques to achieve this type of particle deposition have been evaluated and reduced to practice such as cold gas dynamic spraying (cold spray deposition), kinetic metallization, electromagnetic particle acceleration, modified high velocity air fuel spraying, or high velocity impact fusion (HVIF). These are examples of high velocity deposition processes where metallurgical transformation of powder metal particles is not encountered. Preferably, the invention uses the cold spray deposition process. However, the invention may use other cold deposition processes.

The use of any one of these deposition techniques 203 results in uniform filler material thickness over the joint interface 105 contours (steps 535, 540, and 545).

FIG. 3 shows the component parts 101, 103 with the deposited braze filler material 301 positioned for heat application (step 550). The components may be held in a fixture (step 555) and heat may be applied using induction heating (step 560) or placement in a furnace (step 565). While a group of component parts are being heated, another group may be loaded or unloaded. Heat may be applied from one induction coil to another for component production. Control may be provided by any control means such as a programmable logic controller (PLC), distributed control system (DCS) or other.

The heating time, power, and other parameters can be set so as to allow different sized components to be brazed. This provides for inline production.

Brazing takes place above 840 °F (449°C) which is lower than the melting point of the base material. The materials to be joined are commonly heated to about 100 °F (56°C) above the temperature at which the filler material being used has turned liquid, so that the liquid filler material will cover all of the mating surfaces and then alloy with and form a permanent bond between those surfaces. Brazing may take place in a vacuum (step 570). Gas atmospheres can be used to enhance the vacuum brazing process. Nitrogen or argon not only prevent alloy evaporation, but also protect the part assembly from oxides and discoloration.

FIG. 4 shows a completed braze (step 575). The interface between the two component parts 101, 103 becomes a diffusion bond 401. The filler material may be deposited using cold spray on either or both component interfaces.

The invention also extends to the application of a solder filler material.

## Claims

1. A method of joining a first component (101) to a second component (103) comprising:
selecting at least one material for a filler material (301) ;
applying the filler material (301) to an interface surface (105) of the first component;
providing a spray nozzle (205); **characterized in that** said method Further comprises
deriving, prior to initiating deposition of said filler material, a nozzle path across the interface surface, a travel speed of said nozzle over said nozzle path and a spray distance for said nozzle path;
depositing said at least one filler material in solid particle form (301) from said nozzle (205) onto the interface surface (105) so that said filler material (301) plastically deforms without melting and bonds to the interface surface (105) upon impact with the interface surface (105); and
said depositing step comprising controlling a transition rate and an orientation of said nozzle (205) so as to achieve a uniform filler material thickness (207) on said interface surface; and
joining said first component (10) to a second component (103) wherein said joining step comprises holding said first and second components (101, 103) in a fixture and applying heat to said first and second components (101, 103) and said heat said depositing step comprising controlling a transition rate and an orientation of said nozzle (205) so as to achieve a uniform filler material thickness (207) on said interface applying step comprises heating said first and second components (101, 103) to a temperature above the temperature at which the filler material turns liquid.

2. The method according to claim 1 wherein said filler material (301) is a braze filler material.

3. The method according to claim 1 wherein said filler material (301) is a solder filler material.

4. The method according to claim 2 or 3 wherein said depositing comprises providing said filler material (301) in particle form having a particle size no greater than 50 microns.

5. The method according to claim 2 or 3 wherein said depositing comprises providing said filler material (301) in particle form having a particle size in the range of from 5 microns to 50 microns.

6. The method according to any preceding claim wherein said spray distance is defined between a spray end of said nozzle (205) and the component interface surface (105).

7. The method according to claim 6 wherein said spray distance is not more than 50 mm.

8. The method according to claim 6 wherein said spray distance is in the range of from 10 mm to 50 mm.

9. The method according to claim 7 or 8 wherein said spray distance varies throughout said nozzle path.

10. The method according to claim 7, 8 or 9 wherein said travel speed varies throughout said nozzle path.

11. The method according to any preceding claim, further comprising maintaining the spray nozzle (205) perpendicular to the interface surface.

12. The method according to any.preceding claim further comprising selecting a carrier gas from the group consisting of helium, nitrogen, another inert gas, and mixtures thereof.

13. The method according to any preceding claim wherein said depositing comprises accelerating particles of said filler material (301) to a speed in the range of from 825 m/s to 1400 m/s.

14. The method according to claim 12 wherein said depositing comprises accelerating said particles to a speed in the range of from 850 m/s to 1200 m/s.

15. The method according to claim 13 or 14 wherein said depositing further comprises feeding said filler material to said spray nozzle at a feed rate of from 10 grams/min to 100 grams/min using said selected carrier gas.

16. The method according to claim 15 wherein said feeding comprises feeding said filler material to said spray nozzle at a feed rate of from 10 grams/min to 50 grams/min.

17. The method according to claim 16 wherein said carrier gas is helium and said feeding comprises feeding helium to said nozzle at a flow rate of from 0.001 SCFM to 50 SCFM (0.283 to 1415.8 litres/minute).

18. The method according to claim 17 wherein said feeding comprises feeding said helium to said nozzle at a flow rate in the range of from 8.0 SCFM to 15 SCFM (226.5 to 424.75 litres/minute).

19. The method according to claim 16 wherein said carrier gas is nitrogen and said feeding comprises feeding said nitrogen to said nozzle at a flow rate of from 0.001 SCFM to 30 SCFM (0.283 to 849.5 litres/minute).

20. The method according to claim 19 wherein said feeding comprises feeding said nitrogen to said nozzle at a flow rate of from 4.0 SCFM to 10 SCFM (113.3 to 283.2 litres/minute).

21. The method according to any preceding claim wherein said depositing comprises passing filler material particles through said nozzle (205) using a main gas selected from the group consisting of helium, nitrogen, another inert gas, and mixtures thereof at a main gas temperature in the range of from 600 degrees Fahrenheit to 1200 degrees Fahrenheit (316°C to 649°C) and at a spray pressure in the range of from 200 psi to 500 psi (1.38 to 3.45 MPa).

22. The method according to claim 21 wherein said passing comprises passing said filler material particles through said nozzle at a main gas temperature in the range of from 700 degrees Fahrenheit to 1000 degrees Fahrenheit (371°C to 538°C) at a spray pressure in the range of from 200 psi to 400 psi (1.38 to 2.76 MPa).

23. The method according to claim 21 wherein said main gas temperature is in the range of from 725 degrees Fahrenheit to 900 degrees Fahrenheit (385°C to 482°C) at a spray pressure in the range of from 275 psi to 375 psi (1.90 to 2.59 MPa).

24. The method according to any of claims 21 to 23 wherein said main gas comprises helium and said passing comprises feeding said helium to said nozzle at a flow rate in the range of from 0.001 SCFM to 50 SCFM (0.283 to 1415.8 litres/minute).

25. The method according to claim 24 wherein said helium feeding comprises feeding said helium to said nozzle at a flow rate in the range of from 15 SCFM to 35 SCFM (424.75 to 991.1 litres/minute).

26. The method according to any of claims 21 to 23 wherein said main gas comprises nitrogen and said passing comprises feeding said nitrogen to said nozzle at a feed rate in the range of from 0.001 SCFM to 30 SCFM (0.283 to 849.5 litres/minute).

27. The method according to claim 26 wherein said nitrogen feeding comprises feeding said nitrogen to said nozzle at a feed rate in the range of from 4.0 to 8.0 SCFM (113.3 to 226.5 litres/minute).

## Patentansprüche

1. Verfahren zum Anfügen einer ersten Komponente (101) an eine zweite Komponente (103), umfassend:
Auswählen mindestens eines Materials als Füllmaterial (301);
Applizieren des Füllmaterials (301) auf einer Anschlussoberfläche (105) der ersten Komponente;
Bereitstellen einer Sprühdüse (205);
**dadurch gekennzeichnet, dass** das Verfahren außerdem Folgendes umfasst:
Ableiten, vor Initiierung der Ablagerung besagten Füllmaterials, einer über die Anschlussoberfläche führenden Düsenstrecke, einer Bewegungsgeschwindigkeit der Düse über die Düsenstrecke hinweg sowie einer Sprühdistanz für die Düsenstrecke;
Ablagern des wenigstens einen Füllmaterials in Festpartikelfonn (301) von der Düse (205) auf die Anschlussoberfläche (105), sodass das Füllmaterial (301) sich plastisch verformt ohne zu schmelzen und sich beim Auftreffen auf die Anschlussoberfläche (105) an die Anschlussoberfläche (105) bindet; und
der Schritt des Ablagerns die Steuerung einer Übergangsrate und einer Ausrichtung der Düse (205) umfasst, um eine einheitliche Füllmaterialdicke (207) auf der Anschlussoberfläche zu erzielen; und
Anfügen der ersten Komponente (101) an eine zweite Komponente (103), wobei der Schritt des Anfügens das Halten der ersten und zweiten Komponente (101, 103) in einer Halterung und das Applizieren von Wärme auf die erste und zweite Komponente (101, 103), wobei der Schritt der Wänneapplikation das Erwärmen der ersten und zweiten Komponente (101, 103) auf eine Temperatur über jener Temperatur umfasst, bei der sich das Füllmaterial verflüssigt.

2. Verfahren nach Anspruch 1, wobei das Füllmaterial (301) ein Hartlötfüllmaterial ist.

3. Verfahren nach Anspruch 1, wobei das Füllmaterial (301) ein Weichlötfüllmaterial ist.

4. Verfahren nach Anspruch 2 oder 3, wobei das Ablagern Bereitstellen des Füllmaterials (301) in Partikelform umfasst, wobei die Partikelgröße nicht über 50 Mikrometern liegt.

5. Verfahren nach Anspruch 2 oder 3, wobei das Ablagern Bereitstellen des Füllmaterials (301) in Partikelform umfasst, wobei die Partikelgröße in einem Bereich zwischen 5 Mikrometern und 50 Mikrometern liegt.

6. Verfahren nach einem der vorangehenden Ansprüche, wobei die Sprühdistanz von einem Sprühende der Düse (205) und der Komponenten-Anschlussoberfläche (105) definiert wird.

7. Verfahren nach Anspruch 6, wobei die Sprühdistanz nicht mehr als 50 mm beträgt.

8. Verfahren nach Anspruch 6, wobei die Sprühdistanz in einem Bereich zwischen 10 mm und 50 mm liegt.

9. Verfahren nach Anspruch 7 oder 8, wobei die Sprühdistanz im Verlauf der Düsenstrecke variiert.

10. Verfahren nach Anspruch 7, 8 oder 9, wobei die Bewegungsgeschwindigkeit im Verlauf der Düsenstrecke variiert.

11. Verfahren nach einem der vorangehenden Ansprüche, ferner umfassend Beibehalten der Sprühdüse (205) senkrecht zur Anschlussoberfläche.

12. Verfahren nach einem der vorangehenden Ansprüche, ferner umfassend Auswählen eines Trägergases aus einer Gruppe, die aus Helium, Stickstoff, einem anderen Inertgas und Mischungen dieser Gase besteht.

13. Verfahren nach einem der vorangehenden Ansprüche, wobei das Ablagern Beschleunigen von Partikeln des Füllmaterials (301) auf eine Geschwindigkeit im Bereich von 825 m/s bis 1400 m/s umfasst.

14. Verfahren nach Anspruch 12, wobei das Ablagern Beschleunigen von Partikeln des Füllmaterials (301) auf eine Geschwindigkeit im Bereich von 850 m/s bis 1200 m/s umfasst.

15. Verfahren nach Anspruch 13 oder 14, wobei das Ablagern ferner Einspeisen des Füllmaterials in die Sprühdüse bei einer Einspeisungsrate von 10 Gramm pro Minute bis 100 Gramm pro Minute mithilfe des ausgewählten Trägergases umfasst.

16. Verfahren nach Anspruch 15, wobei das Einspeisen Einspeisen des Füllmaterials in die Sprühdüse bei einer Einspeisungsrate von 10 Gramm pro Minute bis 50 Gramm pro Minute umfasst.

17. Verfahren nach Anspruch 16, wobei das Trägergas Helium ist und das Einspeisen Einspeisen von Helium in die Sprühdüse bei einer Fließrate von 0,001 SCFM bis 50 SCFM (0,283 bis 1415,8 Liter pro Minute) umfasst.

18. Verfahren nach Anspruch 17, wobei das Einspeisen Einspeisen von Helium in die Sprühdüse bei einer Fließrate von 8,0 SCFM bis 15 SCFM (226,5 bis 424,75 Liter pro Minute) umfasst.

19. Verfahren nach Anspruch 16, wobei das Trägergas Stickstoff ist und das Einspeisen Einspeisen von Stickstoff in die Sprühdüse bei einer Fließrate von 0,001 SCFM bis 30 SCFM (0,283 bis 849,5 Liter pro Minute) umfasst.

20. Verfahren nach Anspruch 19, wobei das Einspeisen Einspeisen von Stickstoff in die Sprühdüse bei einer Fließrate von 4,0 SCFM bis 10 SCFM (113,3 bis 283,2 Liter pro Minute) umfasst.

21. Verfahren nach einem der vorangehenden Ansprüche, wobei das Ablagern Leiten von Füllmaterialpartikeln durch die Düse (205) mithilfe eines Hauptgases umfasst, das aus der Gruppe ausgewählt wird, die aus Helium, Stickstoff, einem anderen Inertgas und Mischungen dieser Gase besteht, und zwar bei einer Hauptgastemperatur im Bereich von 600 Grad Fahrenheit bis 1200 Grad Fahrenheit (316 °C bis 649 °C) sowie bei einem Sprühdruck im Bereich von 200 psi bis 500 psi (1,38 bis 3,45 MPa).

22. Verfahren nach einem der vorangehenden Ansprüche, wobei das Leiten der Füllmaterialpartikeln durch die Düse bei einer Hauptgastemperatur im Bereich von 700 Grad Fahrenheit bis 1000 Grad Fahrenheit (371 °C bis 538 °C) bei einem Sprühdruck im Bereich von 200 psi bis 400 psi (1,38 bis 2,76 MPa) umfasst.

23. Verfahren nach Anspruch 21, wobei die Hauptgastemperatur im Bereich von 725 Grad Fahrenheit bis 900 Grad Fahrenheit (385 °C bis 482 °C) bei einem Sprühdruck im Bereich von 275 psi bis 375 psi (1,90 bis 2,59 MPa) liegt.

24. Verfahren nach einem der Ansprüche 21 bis 23, wobei das Hauptgas Helium umfasst und das Leiten Einspeisen des Heliums in die Düse bei einer Fließrate im Bereich von 0,001 SCFM bis 50 SCFM (0,283 bis 1415,8 Liter pro Minute) umfasst.

25. Verfahren nach Anspruch 24, wobei das Einspeisen von Helium Einspeisen des Heliums in die Düse bei einer Fließrate im Bereich von 15 SCFM bis 35 SCFM (424,75 bis 991,1 Liter pro Minute) umfasst.

26. Verfahren nach einem der Ansprüche 21 bis 23, wobei das Hauptgas Stickstoff umfasst und das Leiten Einspeisen des Stickstoffs in die Düse bei einer Fließrate im Bereich von 0,001 SCFM bis 30 SCFM (0,283 bis 849,5 Liter pro Minute) umfasst.

27. Verfahren nach Anspruch 26, wobei das Einspeisen von Natrium Einspeisen des Natriums in die Düse bei einer Fließrate im Bereich von 4,0 SCFM bis 8,0 SCFM (113,3 bis 226,5 Liter pro Minute) umfasst.

## Revendications

1. Procédé de jonction d'un premier composant (101) à un deuxième composant (103) comprenant :
la sélection d'au moins un matériau destiné à un matériau de garniture (301) ;
l'application du matériau de garniture (301) sur une surface d'interface (105) du premier composant ;
l'utilisation d'une tuyère de pulvérisation (205) ; **caractérisé en ce que** ledit procédé comprend en outre
la dérivation, avant de lancer le dépôt dudit matériau de garniture, d'une voie de tuyère à travers la surface d'interface, une vitesse de parcours de ladite tuyère au-dessus de ladite voie de tuyère et sur une distance de pulvérisation pour ladite voie de tuyère ;
le dépôt dudit au moins un matériau de garniture sous forme de particules solides (301) de ladite tuyère (205) à la surface d'interface (105) pour que ledit matériau de garniture (301) se déforme de manière plastique sans fondre et se lie à la surface d'interface (105) lors d'un impact avec la surface d'interface (105) ; et
ladite étape de dépôt comprenant le contrôle d'une vitesse de transition et d'une orientation de ladite tuyère (205) de manière à obtenir une épaisseur uniforme (207) de matériau de garniture sur ladite surface d'interface ; et
la jonction dudit premier composant (10) à un deuxième composant (103), ladite étape de jonction comprenant le maintient desdits premier et deuxième composants (101, 103) dans une installation et l'application de chaleur sur lesdits premier et deuxième composants (101, 103) et ladite étape d'application comprenant le chauffage desdits premier et deuxième composants (101, 103) jusqu'à une température supérieure à la température à laquelle le matériau de garniture devient liquide.

2. Procédé selon la revendication 1, dans lequel ledit matériau de garniture (301) est un matériau de garniture de brasage.

3. Procédé selon la revendication 1, dans lequel ledit matériau de garniture (301) est un matériau de garniture de soudage.

4. Procédé selon la revendication 2 ou 3, dans lequel ledit dépôt comprend l'utilisation dudit matériau de garniture (301) sous forme de particules dont la taille de particule ne dépasse pas 50 µm.

5. Procédé selon la revendication 2 ou 3, dans lequel ledit dépôt comprend l'utilisation dudit matériau de garniture (301) sous forme de particules dont la taille de particule est comprise entre 5 et 50 µm.

6. Procédé selon l'une quelconque des revendications précédentes, dans lequel ladite distance de pulvérisation est définie entre une extrémité de pulvérisation de ladite tuyère (205) et la surface d'interface de composant (105).

7. Procédé selon la revendication 6, dans lequel ladite distance de pulvérisation ne dépasse pas 50 mm.

8. Procédé selon la revendication 6, dans lequel ladite distance de pulvérisation est comprise entre 10 et 50 mm.

9. Procédé selon la revendication 7 ou 8, dans lequel ladite distance de pulvérisation varie tout au long de ladite voie de tuyère.

10. Procédé selon la revendication 7, 8 ou 9, dans lequel ladite vitesse de parcours varie tout au long de ladite voie de tuyère.

11. Procédé selon l'une quelconque des revendications précédentes, comprenant en outre le maintien de la tuyère de pulvérisation (205) perpendiculaire à la surface d'interface.

12. Procédé selon l'une quelconque des revendications précédentes, comprenant en outre le choix d'un gaz porteur dans l'ensemble constitué de l'hélium, de l'azote, d'un autre gaz inerte et de leurs mélanges.

13. Procédé selon l'une quelconque des revendications précédentes, dans lequel ledit dépôt comprend l'accélération de particules dudit matériau de garniture (301) jusqu'à une vitesse comprise entre 825 m/s et 1 400 m/s.

14. Procédé selon la revendication 12, dans lequel ledit dépôt comprend l'accélération desdites particules jusqu'à une vitesse comprise entre 850 et 1 200 m/s.

15. Procédé selon la revendication 13 ou 14, dans lequel ledit dépôt comprend en outre l'introduction dudit matériau de garniture dans ladite tuyère de pulvérisation à une vitesse d'alimentation comprise entre 10 et 100 g/mn à l'aide dudit gaz porteur choisi.

16. Procédé selon la revendication 15, dans lequel ladite alimentation comprend l'introduction dudit matériau de garniture dans ladite tuyère de pulvérisation à une vitesse d'alimentation comprise entre 10 et 50 g/mn.

17. Procédé selon la revendication 16, dans lequel ledit gaz porteur est de l'hélium et où ladite alimentation implique l'introduction d'hélium dans ladite tuyère à un débit compris entre 0,001 et 50 SCFM (0,283 à 1 415,8 L/mn).

18. Procédé selon la revendication 17, dans lequel ladite alimentation implique l'introduction d'hélium dans ladite tuyère à un débit compris entre 8,0 et 15 SCFM (226,5 à 424,75 L/mn).

19. Procédé selon la revendication 16, dans lequel ledit gaz porteur est de l'azote et où ladite alimentation implique l'introduction d'azote dans ladite tuyère à un débit compris entre 0,001 et 30 SCFM (0,283 à 849,5 L/mn).

20. Procédé selon la revendication 19, dans lequel ladite alimentation implique l'introduction d'azote dans ladite tuyère à un débit compris entre 4,0 et 10 SCFM (113,3 à 283,2 L/mn).

21. Procédé selon l'une quelconque des revendications précédentes, dans lequel ledit dépôt comprend le fait de faire passer des particules de matériau de garniture à travers ladite tuyère (205) à l'aide d'un gaz principal choisi dans l'ensemble constitué d'hélium, d'azote, d'un autre gaz inerte et de leurs mélanges à une température de gaz principal comprise entre 600 et 1 200 °F (316 °C à 649 °C) et sous une pression de pulvérisation comprise entre 200 et 500 psi (1,38 à 3,45 MPa).

22. Procédé selon la revendication 21, dans lequel ledit passage comprend le fait de faire passer lesdites particules de matériau de garniture à travers ladite tuyère à une température de gaz principal comprise entre 700 et 1 000 °F (371 à 538 °C) et sous une pression de pulvérisation comprise entre 200 et 400 psi (1,38 à 2,76 MPa).

23. Procédé selon la revendication 21, dans lequel ladite température de gaz principal est comprise entre 725 et 900 °F (385 à 482 °C) et sous une pression de pulvérisation comprise entre 275 et 375 psi (1,90 à 2,59 MPa).

24. Procédé selon l'une quelconque des revendications 21 à 23, dans lequel ledit gaz principal contient de l'hélium et où ledit passage comprend l'introduction dudit hélium dans ladite tuyère à un débit compris entre 0,001 et 50 SCFM (0,283 à 1 415,8 L/mn).

25. Procédé selon la revendication 24, dans lequel ladite introduction d'hélium comprend l'introduction dudit hélium dans ladite tuyère à un débit compris entre 15 et 35 SCFM (424,75 à 991,1 L/mn).

26. Procédé selon l'une quelconque des revendications 21 à 23, dans lequel ledit gaz principal contient de l'azote et où ledit passage comprend l'introduction dudit azote dans ladite tuyère à un débit compris entre 0,001 et 30 SCFM (0,283 à 849,5 L/mn).

27. Procédé selon la revendication 26, dans lequel ladite introduction d'azote comprend l'introduction dudit azote dans ladite tuyère à un débit compris entre 4,0 et 8,0 SCFM (113,3 à 226,5 L/mn).
